# EUROPÄISCHE PATENTANMELDUNG

(11) **EP 4 508 966 A1**
(43) Veröffentlichungstag der Anmeldung: **19.02.2025**
(21) Anmeldenummer: 24193930.5
(22) Anmeldetag: 09.08.2024
(51) Int. Cl.: A01C 15/12, A01C 15/18, A01C 21/00

(54) **VERFAHREN ZUM AUSBRINGEN VON STREUGUT MITTELS EINES STREUFAHRZEUGS SOWIE BETREFFENDES STREUFAHRZEUG**

(30) Priorität: 17.08.2023 DE 102023122048
(71) Anmelder: Ludwig Bergmann GmbH, 49424 Goldenstedt (DE)
(72) Erfinder: Osterholz, Benjamin, 27232 Sulingen (DE); Brüggemann, Klaus, 27777 Ganderkesee (DE)
(74) Vertreter: Eisenführ Speiser

(57) **Zusammenfassung**

Die Offenlegungsschrift betrifft ein Verfahren (100) zum Ausbringen von Streugut mittels eines Streufahrzeugs (6), insbesondere mittels eines Dung- und/oder Universalstreuers (6), wobei das Streufahrzeug (6) eine Ladefläche (8) zur Aufnahme von Streugut, wenigstens ein Ausbringmittel (10), mittels welchem Streugut erfasst und ausgebracht wird, und einen beweglichen Transportboden (14) aufweist, welcher dazu eingerichtet ist, das Streugut dem Ausbringmittel (10) zuzuführen, wobei das Verfahren (100) die Schritte umfasst: Bereitstellen (102) einer Transportbodengeschwindigkeit (u) für einen Streuvorgang, Erzeugen (104) von Steuerungssignalen (16), welche dazu eingerichtet sind, eine Fahrgeschwindigkeit (v) einer mit dem Streufahrzeug (6) gekoppelten Zugmaschine (4) einzustellen, wobei die Steuerungssignale (16) in Abhängigkeit von einer gewünschten Streugut-Ausbringmenge (mₛₒₗₗ) erzeugt werden, während des Streuvorgangs: Betreiben (106) des Transportbodens (14) mit der bereitgestellten Transportbodengeschwindigkeit (u), und Einstellen (108) der Fahrgeschwindigkeit (v) der Zugmaschine (4) mittels den Steuerungssignalen (16). Die Offenlegungsschrift betrifft ferner ein betreffendes Streufahrzeug (6) sowie eine landwirtschaftliche Maschine.

## Beschreibung

Die Erfindung betrifft ein Verfahren zum Ausbringen von Streugut mittels eines Streufahrzeugs, insbesondere mittels eines Dung- und/oder Universalstreuers, wobei das Streufahrzeug eine Ladefläche zur Aufnahme von Streugut, wenigstens ein Ausbringmittel, mittels welchem Streugut erfasst und ausgebracht wird, und einen beweglichen Transportboden aufweist, welcher dazu eingerichtet ist, das Streugut dem Ausbringmittel zuzuführen. Die Erfindung betrifft ferner ein betreffendes Streufahrzeug sowie eine landwirtschaftliche Maschine.

Streufahrzeuge werden regelmäßig eingesetzt, um Streugut verschiedener Art auszutragen. Hierbei kann es sich um Mist handeln, aber auch um Laub, Kompost, Klärschlamm, Kalk, alle Arten von Stalldung sowie weitere organische Wirtschaftsdünger, die je nach Bedarf auf das Grünland oder einen Acker oder der gleichen gebracht werden.

Streufahrzeuge in Form von Dung- und/oder Universalstreuern eignen sich besonders zum Ausbringen von Streugut verschiedener Art, wie beispielsweise organischem und grobem Streugut. Dung- und/oder Universalstreuer weisen einen beweglichen Transportboden auf, der im Bereich der oder auf der Ladefläche angeordnet ist. Ein solcher Transportboden, auch als Kratzboden bezeichnet, ist dazu eingerichtet, das auf der Ladefläche geladene Streugut auf der Ladefläche mitzunehmen und dem Ausbringmittel zuzuführen. Zu diesem Zweck kann der Transportboden Mitnehmer aufweisen, die an einer Kette angeordnet sind.

Beim Ausbringen von Streugut ist die Erreichung einer guten Streuqualität von großer Wichtigkeit. Eine gute Streuqualität bei einem Dung- und/oder Universalstreuer zeichnet sich unter anderem dadurch aus, dass genau so viel Streugut wie gewünscht auf eine bestimmte landwirtschaftliche Nutzfläche aufgebracht wird und darüber hinaus das Streumaterial unter allen Bedingungen gleichmäßig verteilt wird.

Bei aus dem Stand der Technik vorbekannten Streuverfahren erfolgt eine Regelung der Streugut-Ausbringmenge durch Regelung der Transportbodengeschwindigkeit während des Streuens unter anderem abhängig vom Streumaterial, der eingestellten Ausbringmenge und der Fahrgeschwindigkeit. Darüber hinaus können weitere Parameter Berücksichtigung finden. Eine Anpassung der Transportbodengeschwindigkeit kann beispielsweise dann nötig werden, wenn auf Basis sogenannter Applikationskarten für eine Teilfläche eine abweichende Ausbringmenge vorgesehen ist oder aber falls eine Soll-Ausbringmenge bei gegebener Transportbodengeschwindigkeit nicht erreicht werden kann.

Als nachteilig hierbei hat sich jedoch gezeigt, dass das Streubild äußerst sensibel auf Veränderung der Transportbodengeschwindigkeit reagiert. Verändert sich die Transportbodengeschwindigkeit aus einem für das Streubild optimalen Bereich, verschlechtert sich das Streubild - und somit auch die Streuqualität - signifikant.

Vor diesem Hintergrund lag der Erfindung die Aufgabe zugrunde, ein Verfahren sowie ein Streufahrzeug der eingangs genannten Art dahingehend weiterzubilden, dass die im Stand der Technik aufgefundenen Nachteile möglichst weitgehend behoben werden. Insbesondere waren ein Verfahren bzw. ein Streufahrzeug anzugeben, bei dem die Streuqualität verbessert wird, eine bedarfsgerechtere Ausnutzung der Nährstoffe im Streugut erfolgt und darüber hinaus eine Entlastung des Fahrers einer betreffenden landwirtschaftlichen Maschine erreicht wird.

Erfindungsgemäß wird die Aufgabe bei einem Verfahren der eingangs genannten Art durch die Schritte gelöst: Bereitstellen einer, insbesondere optimalen, Transportbodengeschwindigkeit für einen Streuvorgang, Erzeugen von Steuerungssignalen, welche dazu eingerichtet sind, eine Fahrgeschwindigkeit einer mit dem Streufahrzeug gekoppelten Zugmaschine einzustellen, wobei die Steuerungssignale in Abhängigkeit von einer gewünschten Streugut-Ausbringmenge erzeugt werden, während des Streuvorgangs: Betreiben des Transportbodens mit der bereitgestellten Transportbodengeschwindigkeit, und Einstellen der Fahrgeschwindigkeit der Zugmaschine mittels den Steuerungssignalen.

Die Erfindung macht sich die Erkenntnis zunutze, dass die Fahrgeschwindigkeit der Zugmaschine mittels den Steuerungssignalen variabel eingestellt werden kann, während die Transportbodengeschwindigkeit konstant gehalten wird. Da die Transportbodengeschwindigkeit unmittelbaren Einfluss auf die Verteilung des zu streuenden Materials hat, kann hierdurch eine verbesserte Streuqualität von organischen Materialien erreicht werden. Um auf Änderung der gewünschten Ausbringmenge reagieren zu können, wird die Fahrgeschwindigkeit der Zugmaschine beeinflusst.

Neben einer verbesserten Streugut-Verteilung, die sich insbesondere dadurch einstellt, dass die Transportbodengeschwindigkeit in einem für das jeweilige Streugut optimalen Bereich verbleiben kann, wird durch das Verfahren erreicht, dass die Abweichungen zwischen einer Ist-Ausbringmenge und einer Soll-Ausbringmenge für eine bestimmte landwirtschaftliche Fläche minimiert werden. Dies bewirkt auch, dass eine bedarfsgerechtere Ausnutzung der Nährstoffe im Streumaterial erfolgen kann. Die Flächen werden mit exakt so viel Streugut bestreut, wie dies für eine optimale Nährstoffversorgung der Flächen erforderlich ist. Eine Überdüngung der Flächen kann vermieden werden, wodurch der Umweltschutz verbessert wird. Es erfolgt eine präzise Ausbringung mit gleichmäßiger Querverteilung des Streuguts.

Auch für den Fahrer einer betreffenden landwirtschaftlichen Maschine ergeben sich eine Reihe von Vorteilen. Durch die Steuerung der Fahrgeschwindigkeit der Zugmaschine wird der Fahrer signifikant entlastet. Er kann sich auf eine Überwachung des Streuvorgangs konzentrieren und wird von einer Anpassung der Fahrgeschwindigkeit des Traktors passend zum Streumaterial sowie zur vorgegebenen Ausbringmenge und Arbeitsbreite entlastet.

Die Erfindung wird dadurch weitergebildet, dass die Transportbodengeschwindigkeit für den Streuvorgang konstant ist. Unter einem Streuvorgang wird dabei insbesondere die Ausbringung einer bestimmten Menge eines auf dem Streufahrzeug geladenen Streugutes auf eine bestimmte landwirtschaftliche Fläche verstanden. Eine für den Streuvorgang konstante Transportbodengeschwindigkeit kann soweit insbesondere abhängig vom Streugut und der gewünschten Ausbringmenge für eine landwirtschaftliche Fläche gewählt werden.

Gemäß einer Ausführungsform erfolgt das Erzeugen der Steuerungssignale mit den Schritten: Bereitstellen einer Soll-Ausbringmenge für eine landwirtschaftliche Fläche, Bestimmen einer Ist-Ausbringmenge des Streufahrzeugs für die Fläche, Bestimmen einer Differenz zwischen der Soll-Ausbringmenge und der Ist-Ausbringmenge, Erzeugen der Steuerungssignale in Abhängigkeit von der bestimmten Differenz. Gemäß einer Ausführungsform wird die Fahrgeschwindigkeit der Zugmaschine mittels den Steuerungssignalen derart variiert, dass die Differenz zwischen der Ist-Ausbringmenge und der Soll-Ausbringmenge minimiert wird. Auf diese Weise wird trotz konstanter Transportbodengeschwindigkeit für einen Streuvorgang sichergestellt, dass die Ist-Ausbringmenge des Streufahrzeugs möglichst exakt der Soll-Ausbringmenge für eine landwirtschaftliche Fläche entspricht. Hierdurch wird eine besonders bedarfsgerechte Versorgung der landwirtschaftlichen Fläche mit Nährstoffen erreicht. Gleichzeitig wird aufgrund der konstanten Transportbodengeschwindigkeit ein besonders gleichmäßiges Streubild erreicht.

Gemäß einer Ausführungsform wird die Soll-Ausbringmenge für die landwirtschaftliche Fläche auf Basis einer Applikationskarte und/oder auf Basis einer Benutzereingabe bereitgestellt. Im Rahmen der Benutzereingabe kann beispielsweise für eine landwirtschaftliche Fläche eine konstante Soll-Ausbringmenge definiert werden. Unter Verwendung einer Applikationskarte kann jedoch auch eine teilflächenspezifische Bestreuung einer landwirtschaftlichen Fläche erfolgen. Eine solche Applikationskarte umfasst typischerweise eine bestimmte Anzahl von Zonen, auch als Treatmentzonen bezeichnet, für die jeweils eine bestimmte Masse an Streumaterial pro Fläche aufzubringen ist. Durch die Ermittlung bzw. Bereitstellung der Soll-Ausbringmenge über eine Applikationskarte können auch anspruchsvolle Soll-Ausbringmengenverläufe für Teilflächen realisiert werden, ohne dass der Fahrer einer landwirtschaftlichen Maschine manuell auf den Streuvorgang Einfluss nehmen muss.

Gemäß einer Ausführungsform wird die Ist-Ausbringmenge des Streuguts mittels einer an dem Streufahrzeug angeordneten Wiegeeinrichtung ermittelt. Die Wiegeeinrichtung ist insbesondere dazu eingerichtet, die Masse des auf der Ladefläche aufgenommenen Streugutes permanent oder in Intervallen zu erfassen. Hieraus kann die tatsächlich abgegebene Ist-Ausbringmenge ermittelt werden. Auf diese Weise ist stets bekannt, welche Ist-Ausbringmenge in einem Zeitintervall tatsächlich auf die landwirtschaftliche Fläche abgegeben wird.

Gemäß einer Ausführungsform wird die Transportbodengeschwindigkeit in Abhängigkeit von einer Streugutkennlinie des auszubringenden Streuguts und/oder einer vorgegebenen Arbeitsbreite gewählt. Auf Basis der Streugutdichte und weiterer physikalischer Eigenschaften des Streuguts kann die Transportbodengeschwindigkeit in Abhängigkeit von der gewünschten Ausbringmenge in dem für das Streugut passenden Bereich gewählt werden, sodass die Streuqualität stets optimal bleibt. Gemäß einer Ausführungsform wird die Streugutkennlinie auf Basis des Streugutmaterials ermittelt. Unter Berücksichtigung des Streugutmaterials kann die Transportbodengeschwindigkeit in Abhängigkeit von der gewünschten Ausbringmenge derart gewählt werden, dass sich diese in dem für das Streubild optimalen Bereich befindet.

Gemäß einer Ausführungsform ist das Ausbringmittel über eine Zapfwelle der Zugmaschine rotatorisch angetrieben, wobei das Verfahren eine Regelung der Zapfwellendrehzahl in Abhängigkeit von einer Soll-Arbeitsbreite des Streufahrzeugs umfasst. Die Regelung der Zapfwellendrehzahl kann dabei wie auch das Einstellen der Fahrgeschwindigkeit der Zugmaschine mittels Steuerungssignalen erfolgen, die von dem Streufahrzeug an die Zugmaschine übermittelt werden. Auf diese Weise kann das Ausbringmittel, welches vorzugsweise in Form von zwei optional geneigten Streutellern vorgehalten wird, über die Zugmaschine angetrieben werden, und zwar mit der für die Soll-Arbeitsbreite des Streufahrzeugs erforderlichen Drehzahl. Somit kann auf das Vorsehen separater Antriebe für das Ausbringmittel, insbesondere die Drehteller, verzichtet werden.

Gemäß einer Ausführungsform ist der Transportboden über eine Zapfwelle der Zugmaschine rotatorisch angetrieben, wobei das Verfahren eine Zu- oder Abschaltung des Transportbodenantriebs und/oder eine Regelung der Zapfwellendrehzahl in Abhängigkeit von der gewünschten Transportbodengeschwindigkeit umfasst. Auf diese Weise kann - alternativ zu einem im Stand der Technik häufig verwendeten hydraulischen Antrieb - die Transportbodengeschwindigkeit über die Zapfwellendrehzahl vorgegeben werden, oder aber ein Zu- oder Abschalten des Transportbodenantriebs mittels der Zapfwelle erfolgen. Stand der Technik ist hier insbesondere der hydraulische Antrieb des Transportbodens.

Das erfindungsgemäße Verfahren wird nachfolgend anhand eines Beispiels verdeutlicht. Zunächst wird mittels des Verfahrens eine optimale Transportbodengeschwindigkeit für ein gewähltes Streumaterial, vorgegebenen Soll-Ausbringmengen und eine vorgegebene Arbeitsbreite ermittelt. Die Transportbodengeschwindigkeit beträgt für ein Beispielszenario etwa 0,9 Meter pro Minute. Auf dieser Basis kann nun mittels des Verfahrens ein Steuerungssignal in Abhängigkeit von einer Soll-Ausbringmenge, beispielsweise 20 Tonnen pro Hektar, erzeugt werden, welches bewirkt, dass die Zugmaschine mit einer ausbringungsmengenabhängigen Fahrgeschwindigkeit von beispielsweise 2,6 km/h betrieben wird. Wird nun die vorgegebene Ausbringmenge erhöht, beispielsweise auf 25 Tonnen pro Hektar, so wird die Fahrgeschwindigkeit der Zugmaschine neu berechnet und beträgt bspw. nunmehr 2,1 km/h, wird also mit gestiegener Soll-Ausbringmenge reduziert, sodass mehr Streugut pro Fläche abgegeben wird. Die Transportbodengeschwindigkeit bleibt jedoch unverändert bei 0,9 Metern pro Minute und damit in einem für die Streugutverteilung optimalen Bereich. Wird nun die vorgegebene Ausbringmenge bspw. auf 15 Tonnen pro Hektar reduziert, so wird verfahrensgemäß eine Fahrgeschwindigkeit der Zugmaschine von beispielsweise 3,5 km/h bestimmt, d.h. die Fahrgeschwindigkeit wird erhöht, sodass weniger Streugut pro Fläche abgegeben wird. Auch für diese Soll-Ausbringmenge verbleibt die Transportbodengeschwindigkeit konstant bei 0,9 Metern pro Minute, und damit im optimalen Bereich.

Die Erfindung ist vorstehend unter Bezugnahme auf ein Verfahren beschrieben worden. In einem weiteren Aspekt betrifft die Erfindung ein Streufahrzeug, insbesondere einen Dung- und/oder Universalstreuer mit einer Ladefläche zur Aufnahme von Streugut, wenigstens einem Ausbringmittel, mittels welchem Streugut erfasst und ausgebracht wird, einem beweglichen Transportboden, welcher dazu eingerichtet ist, das Streugut dem Ausbringmittel zuzuführen, und einer Steuerungseinrichtung, welche dazu eingerichtet ist, eine Geschwindigkeit des Transportbodens einzustellen.

Die Erfindung löst die eingangs bezeichnete Aufgabe in Bezug auf das Streufahrzeug, in dem die Steuerungseinrichtung mittels einer Schnittstelle datenleitend mit einer Zugmaschinen-Steuerung verbindbar und dazu eingerichtet ist, eine Fahrgeschwindigkeit der Zugmaschine zu steuern und die Schritte des Verfahrens nach einem der vorstehenden Ausführungsbeispiele auszuführen.

Das Streufahrzeug macht sich die gleichen Vorteile und bevorzugten Ausführungsformen zunutze wie das erfindungsgemäße Verfahren und umgekehrt. Diesbezüglich wird auf die obigen Ausführungen verwiesen und deren Inhalt hiermit einbezogen. Dadurch, dass die Steuerungseinrichtung mittels einer Schnittstelle datenleitend mit einer Zugmaschinen-Steuerung verbindbar ist, kann eine Fahrgeschwindigkeit der Zugmaschine mittels der Steuerungseinrichtung des Streufahrzeugs beeinflusst, d. h. gesteuert werden. Gemäß einer Ausführungsform ist die Schnittstelle eine standardisierte Schnittstelle, insbesondere eine Isobus Tractor Implement Management (TIM)-Schnittstelle. Bei der Isobus-TIM-Schnittstelle handelt es sich um eine standardisierte Schnittstelle, mittels welcher die Steuerungseinrichtung des Streufahrzeugs mit der Zugmaschine auf standardisierte Art und Weise kommunizieren kann. Auf Basis der Standardisierung kann das Streufahrzeug mit sämtlichen Zugmaschinen kommunizieren, die den entsprechenden Standard unterstützen. Das Isobus-TIM ist eine produkt- und herstellerübergreifende Isobus-Lösung, die nunmehr die Nutzung von Vorteilen des Gesamtsystems aus Zugmaschine und Streufahrzeug ermöglicht. Die Kommunikation zwischen Steuerungseinrichtung des Streufahrzeuges und der Zugmaschinen-Steuerung der Zugmaschine erfolgt vorzugsweise bidirektional.

Gemäß einer Ausführungsform weist das Streufahrzeug eine Wiegeeinrichtung, insbesondere eine Brückenwaage, eine hydraulische Waage oder eine mehrkanälige Waage auf, welche datenleitend mit der Steuerungseinrichtung verbunden ist. Die Wiegeeinrichtung ist insbesondere dazu eingerichtet, eine Masse des auf der Ladefläche des Streufahrzeugs aufgenommenen Streugutes zu bestimmen, sodass durch mehrere durchgeführte Messungen des Ladungsgewichtes während eines Streuvorganges die auf die landwirtschaftliche Fläche ausgebrachte Ist-Ausbringmenge ermittelt werden kann. Alternativ kann die Wiegeeinrichtung auch als hydraulische oder mehrkanälige Waage ausgebildet sein.

In einem weiteren Aspekt betrifft die Erfindung eine landwirtschaftliche Maschine mit einer Zugmaschine und einem Streufahrzeug. Die Erfindung löst die eingangs bezeichnete Aufgabe in Bezug auf die landwirtschaftliche Maschine, indem das Streufahrzeug nach einem der vorstehenden Ausführungsbeispiele ausgebildet ist und wobei die Steuerungseinrichtung über die Isobus Tractor Implement Management (TIM)-Schnittstelle mit der Zugmaschinen-Steuerung verbunden ist. Auf diese Weise wird ein Gesamtsystem aus Zugmaschine und Streufahrzeug angegeben, bei dem mittels derTIM-Schnittstelle das Streufahrzeug eine Steuerung der Zugmaschine auf die beschriebene Art und Weise vornehmen kann.

Gemäß einer Ausführungsform weist die Zugmaschine ein satellitennavigationsgestütztes Lenksystem, insbesondere ein GPS-Lenksystem, auf und wobei die Steuerungseinrichtung und/oder die Zugmaschinen-Steuerung dazu eingerichtet ist, Richtungssteuerungssignale zur Steuerung des Lenksystems der Zugmaschine zu erzeugen. Auf diese Weise kann nicht nur die Fahrgeschwindigkeit der Zugmaschine durch das Streufahrzeug beeinflusst werden, sondern auch der Lenkvorgang automatisiert werden, wodurch eine weitergehende Entlastung des Fahrers erfolgen kann. Die Richtungssteuerungssignale können in der Steuerungseinrichtung des Streufahrzeugs erzeugt werden und/oder in der Zugmaschinen-Steuerung selbst.

Die landwirtschaftliche Maschine macht sich die gleichen Vorteile und bevorzugten Ausführungsformen zunutze wie das erfindungsgemäße Verfahren und das erfindungsgemäße Streufahrzeug und umgekehrt. Diesbezüglich wird auf die obigen Ausführungen verwiesen und deren Inhalt hiermit einbezogen.

In der obigen Beschreibung wird primär auf ein Streufahrzeug Bezug genommen, welches als Anhänger ausgebildet ist. Das Streufahrzeug kann jedoch auch als Selbstfahrer ausgebildet sein und eine Zugmaschine bzw. die entsprechenden Antriebskomponenten aufweisen.

Weitere Merkmale und Vorteile der Erfindung ergeben sich aus den beigefügten Ansprüchen und der nachfolgenden Beschreibung, in der ein Ausführungsbeispiel der Erfindung anhand schematischer Zeichnungen im Einzelnen erläutert wird.

Dabei zeigen:
- Fig. 1: eine erfindungsgemäße landwirtschaftliche Maschine mit einer Zugmaschine und einem Streufahrzeug in einer schematischen Darstellung;
- Fig. 2: ein Blockschaltbild eines erfindungsgemäßen Verfahrens;
- Fig. 3: eine erfindungsgemäße Steuerungseinrichtung eines Streufahrzeugs inklusive Eingangs- und Ausgangsgrößen in einer schematischen Darstellung; und
- Fig. 4: ein Diagramm, welches die Auswahl der Transportbodengeschwindigkeit in Abhängigkeit von der Ausbringmenge veranschaulicht.

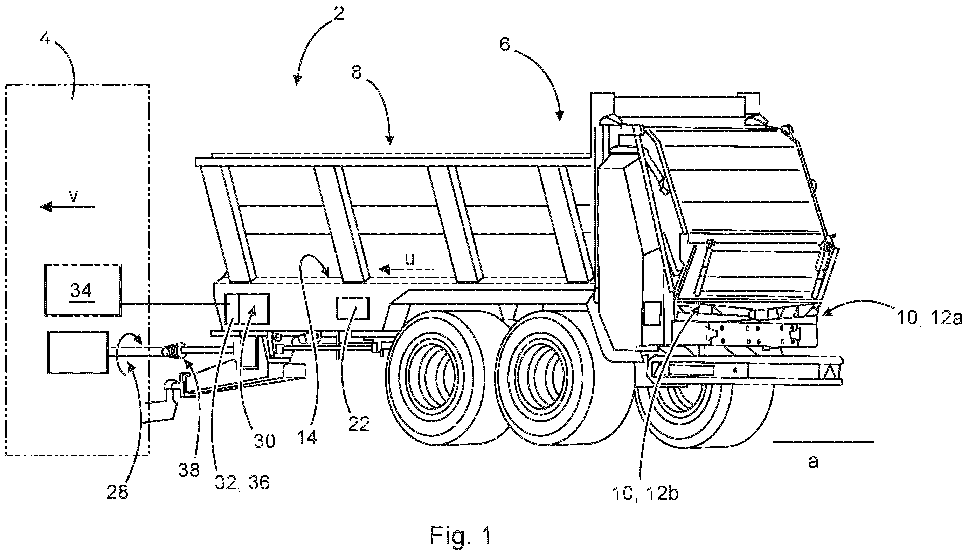

Figur 1 zeigt eine landwirtschaftliche Maschine 2. Die landwirtschaftliche Maschine 2 weist eine in Figur 1 lediglich schematisch dargestellte Zugmaschine 4 auf sowie ein mit der Zugmaschine 4 gekoppeltes Streufahrzeug 6. Das Streufahrzeug 6 ist als Dung- und/oder Universalstreuer6 ausgebildet. Das Streufahrzeug 6 weist eine Ladefläche 8 zur Aufnahme von Streugut auf. Das Streufahrzeug 6 weist ferner zwei Ausbringmittel 10 auf, die als Streuteller 12a, 12b ausgebildet sind. Die Ausbringmittel 10 bzw. die Streuteller 12a, 12b dienen dazu, das auf der Ladefläche 8 aufgenommene Streugut zu erfassen und auf eine landwirtschaftliche Fläche a auszubringen bzw. auszuwerfen. In dem in Figur 1 dargestellten Ausführungsbeispiel sind die Streuteller 12a, 12b gegenüber einer Horizontalen geneigt ausgebildet, sodass unter anderem die Auswurfdistanz des Streuguts im Vergleich zu horizontal angeordneten Streutellern erhöht werden kann. Die Streuteller können jedoch auch, wie bei konventionellen Streuwerken üblich, horizontal angeordnet sein. Das Streufahrzeug 6 weist ferner einen beweglichen Transportboden 14 auf, der sich im Inneren des Streufahrzeugs 6 befindet und daher in Figur 1 nur schematisch angedeutet ist. Der Transportboden 14 ist dazu eingerichtet, das auf der Ladefläche 8 aufgenommene Streugut den Ausbringmitteln 10 bzw. den Streutellern 12a, 12b zuzuführen.

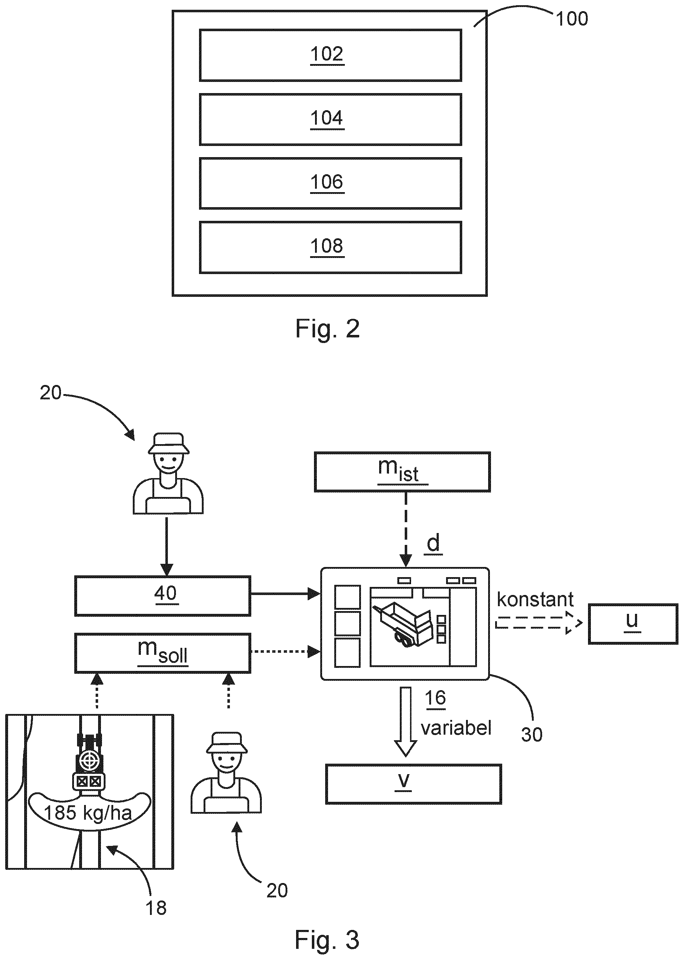

Das Streufahrzeug 6 weist ferner eine Steuerungseinrichtung 30 auf. Die Steuerungseinrichtung 30 ist dazu eingerichtet, eine Geschwindigkeit u des Transportbodens 14 einzustellen. Die Steuerungseinrichtung 30 ist mittels einer Schnittstelle 32 datenleitend mit einer schematisch dargestellten Zugmaschinen-Steuerung 34 verbindbar. Die Steuerungseinrichtung 30 ist dazu eingerichtet, eine Fahrgeschwindigkeit v der Zugmaschine 4 zu steuern. Die Schnittstelle 32 ist vorliegend eine standardisierte Schnittstelle, nämlich eine Isobus Tractor Implement Management (TIM)-Schnittstelle 36. Das Streufahrzeug 6 weist ferner eine Wiegeeinrichtung 22 auf. Die Wiegeeinrichtung 22 ist insbesondere als Brückenwaage ausgebildet, wobei auch andere Waagenarten verwendet werden können. Die Wiegeeinrichtung 22 ist dazu eingerichtet, eine Masse des Streuguts auf der Ladefläche 8 zu erfassen. Durch zeitlich voneinander beabstandete Messungen der Streugutmasse während eines Streuvorgangs kann mittels der Wiegeeinrichtung 22 eine Ist-Ausbringmenge mᵢₛₜ, wie in Figur 3 detailliert, ermittelt werden.

Wie ferner in Figur 1 schematisch dargestellt ist, weist die Zugmaschine 4 eine Zapfwelle 28 auf, die mit einer Welle 38 des Streufahrzeugs 6 verbunden ist. Über die Zapfwelle 28 können optional die Streuteller 12a, 12b rotatorisch angetrieben werden, wobei eine Regelung einer Drehzahl der Zapfwelle 28 mittels der Steuerungseinrichtung 30 des Streufahrzeugs 6 erfolgen kann. Alternativ oder zusätzlich kann die Zapfwelle 28 zum Antrieb des beweglichen Transportbodens 14 dienen.

Figur 2 zeigt eine schematische Darstellung eines erfindungsgemäßen Verfahrens 100 zum Ausbringen von Streugut mittels des Streufahrzeugs 6. Das Verfahren 100 umfasst die Schritte: Bereitstellen 102 einer Transportbodengeschwindigkeit u für einen Streuvorgang, Erzeugen 104 von Steuerungssignalen 16 (vgl. Figur 3), welche dazu eingerichtet sind, die Fahrgeschwindigkeit v einer mit dem Streufahrzeug 6 gekoppelten Zugmaschine 4 einzustellen, wobei die Steuerungssignale 16 in Abhängigkeit von einer gewünschten Streugut Ausbringmenge mₛₒₗₗ erzeugt werden, während des Streuvorgangs: Betreiben 106 des Transportbodens 14 mit der bereitgestellten Transportbodengeschwindigkeit u, und Einstellen 108 der Fahrgeschwindigkeit v der Zugmaschine 4 mittels den Steuerungssignalen 16. Die Transportbodengeschwindigkeit u ist dabei für den Streuvorgang konstant.

In Figur 3 ist die Steuerungseinrichtung 30 inklusive verschiedener Eingangs- und Ausgangsgrößen detailliert. Zum Erzeugen der Steuerungssignale 16, die schließlich die Fahrgeschwindigkeit v der Zugmaschine 4 einstellen bzw. regeln, wird die Soll-Ausbringmenge mₛₒₗₗ für eine landwirtschaftliche Fläche a der Steuerungseinrichtung 30 bereitgestellt. Die Soll-Ausbringmenge mₛₒₗₗ für die landwirtschaftliche Fläche a wird bspw. auf Basis einer Applikationskarte 18 und/oder auf Basis einer Benutzereingabe 20 bereitgestellt. Darüber hinaus erfolgt eine weitere Benutzereingabe 20 hinsichtlich des geladenen Streugutmaterials 40. Der Steuerungseinrichtung 30 werden darüber hinaus Informationen über eine Ist-Ausbringmenge mᵢₛₜ des Streufahrzeugs 6 für die Fläche a zur Verfügung gestellt. Die Ist-Ausbringmenge mᵢₛₜ des Streuguts wird insbesondere mittels der an dem Streufahrzeug 6 angeordneten Wiegeeinrichtung 22 ermittelt, insbesondere durch mehrfach durchgeführte Gewichtsmessungen des geladenen Streugutes mit zeitlichem Abstand, sodass der abgegebene bzw. ausgeworfene Streugut-Massenstrom, d. h. die Ist-Ausbringmenge mᵢₛₜ ermittelt werden kann.

Die Steuerungseinrichtung 30 ist ferner dazu eingerichtet, eine Differenz d zwischen der Soll-Ausbringmenge mₛₒₗₗ und der Ist-Ausbringmenge mᵢₛₜ zu ermitteln. Ferner erfolgt ein Erzeugen der Steuerungssignale 16 in Abhängigkeit von der bestimmten Differenz d. Insbesondere wird die Fahrgeschwindigkeit v der Zugmaschine 4 mittels den Steuerungssignalen 16 derart variiert, dass die Differenz d zwischen der Ist-Ausbringmenge mᵢₛₜ und der Soll-Ausbringmenge mₛₒₗₗ minimiert wird. Dabei ist, wie in Figur 3 dargestellt, die Fahrgeschwindigkeit v der Zugmaschine 4 in Abhängigkeit der Steuerungssignale 16 variabel und die Transportbodengeschwindigkeit u für einen Streuvorgang konstant.

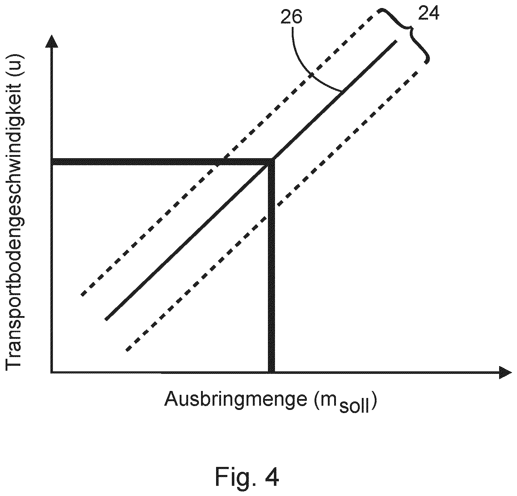

Wie in Figur 4 veranschaulicht ist, wird die Transportbodengeschwindigkeit u für einen Streuvorgang in Abhängigkeit von einer Streugutkennlinie 26 des auszubringenden Streuguts gewählt. Insbesondere wird die Streugutkennlinie 26 auf Basis des Streugutmaterials 40 ermittelt. Die Transportbodengeschwindigkeit u kann sodann insbesondere innerhalb eines die Streugutkennlinie 26 umschließenden Streugutkennlinien-Intervalls 24 gewählt werden. Solange die Transportbodengeschwindigkeit u innerhalb des Streugutkennlinien-Intervalls 24 liegt, bleibt sichergestellt, dass die Transportbodengeschwindigkeit u während des Streuens in einem optimalen Bereich konstant gehalten wird, sodass das Streumaterial unter allen Bedingungen gleichmäßig verteilt wird.

### Bezugszeichenliste

- 2: Landwirtschaftliche Maschine
- 4: Zugmaschine
- 6: Streufahrzeug (Dung- und/oder Universalstreuer)
- 8: Ladefläche
- 10: Ausbringmittel
- 12a,b: Streuteller
- 14: beweglicher Transportboden
- 16: Steuerungssignale
- 18: Applikationskarte
- 20: Benutzereingabe
- 22: Wiegeeinrichtung
- 24: Streugutkennlinien-Intervall
- 26: Streugutkennlinie
- 28: Zapfwelle
- 30: Steuerungseinrichtung
- 32: Schnittstelle
- 34: Zugmaschinen-Steuerung
- 36: Isobus Tractor Implement Management (TIM)-Schnittstelle
- 38: Welle des Streuers
- 40: Streugutmaterial
- 100: Verfahren zum Ausbringen von Streugut
- 102: Bereitstellen einer Transportbodengeschwindigkeit
- 104: Erzeugen von Fahrgeschwindigkeits-Steuerungssignalen
- 106: Betreiben des Transportbodens mit der Transportbodengeschwindigkeit
- 108: Einstellen der Fahrgeschwindigkeit der Zugmaschine
- a: landwirtschaftliche Fläche
- d: Differenz zwischen der Soll-Ausbringmenge und der Ist-Ausbringmenge
- mₛₒₗₗ: Soll-Ausbringmenge
- mᵢₛₜ: Ist-Ausbringmenge
- u: Transportbodengeschwindigkeit
- v: Fahrgeschwindigkeit der Zugmaschine

## Patentansprüche

1. Verfahren (100) zum Ausbringen von Streugut mittels eines Streufahrzeugs (6), insbesondere mittels eines Dung- und/oder Universalstreuers (6), wobei das Streufahrzeug (6) eine Ladefläche (8) zur Aufnahme von Streugut, wenigstens ein Ausbringmittel (10), mittels welchem Streugut erfasst und ausgebracht wird, und einen beweglichen Transportboden (14) aufweist, welcher dazu eingerichtet ist, das Streugut dem Ausbringmittel (10) zuzuführen, **dadurch gekennzeichnet, dass** das Verfahren (100) die Schritte umfasst:
- Bereitstellen (102) einer Transportbodengeschwindigkeit (u) für einen Streuvorgang,
- Erzeugen (104) von Steuerungssignalen (16), welche dazu eingerichtet sind, eine Fahrgeschwindigkeit (v) einer mit dem Streufahrzeug (6) gekoppelten Zugmaschine (4) einzustellen, wobei die Steuerungssignale (16) in Abhängigkeit von einer gewünschten Streugut-Ausbringmenge (mₛₒₗₗ) erzeugt werden,
- Während des Streuvorgangs:
Betreiben (106) des Transportbodens (14) mit der bereitgestellten Transportbodengeschwindigkeit (u), und
Einstellen (108) der Fahrgeschwindigkeit (v) der Zugmaschine (4) mittels den Steuerungssignalen (16).

2. Verfahren (100) nach Anspruch 1,
wobei die Transportbodengeschwindigkeit (u) für den Streuvorgang konstant ist.

3. Verfahren (100) nach Anspruch 1 oder 2,
wobei das Erzeugen der Steuerungssignale (16) mit den Schritten erfolgt:
- Bereitstellen einer Soll-Ausbringmenge (mₛₒₗₗ) für eine landwirtschaftliche Fläche (a),
- Bestimmen einer Ist-Ausbringmenge (mᵢₛₜ) des Streufahrzeugs (6) für die Fläche (a),
- Bestimmen einer Differenz (d) zwischen der Soll-Ausbringmenge (mₛₒₗₗ) und der Ist-Ausbringmenge (mᵢₛₜ),
- Erzeugen der Steuerungssignale (16) in Abhängigkeit von der bestimmten Differenz (d).

4. Verfahren (100) nach Anspruch 3,
wobei die Fahrgeschwindigkeit (v) der Zugmaschine (4) mittels den Steuerungssignalen (16) derart variiert wird, dass die Differenz (d) zwischen der Ist-Ausbringmenge (mᵢₛₜ) und der Soll-Ausbringmenge (mₛₒₗₗ) minimiert wird.

5. Verfahren (100) nach einem der vorstehenden Ansprüche,
wobei die Soll-Ausbringmenge (mₛₒₗₗ) für die landwirtschaftliche Fläche (a) auf Basis einer Applikationskarte (18) und/oder auf Basis einer Benutzereingabe (20) bereitgestellt wird.

6. Verfahren (100) nach einem der Ansprüche 3 bis 5,
wobei die Ist-Ausbringmenge (mᵢₛₜ) des Streuguts mittels einer an dem Streufahrzeug (6) angeordneten Wiegeeinrichtung (22) ermittelt wird.

7. Verfahren (100) nach einem der vorstehenden Ansprüche,
wobei die Transportbodengeschwindigkeit (u) in Abhängigkeit von einer Streugutkennlinie (26) des auszubringenden Streuguts gewählt wird.

8. Verfahren (100) nach Anspruch 7,
wobei die Streugutkennlinie (26) auf Basis des Streugutmaterials (40) ermittelt wird.

9. Verfahren (100) nach einem der vorstehenden Ansprüche,
wobei das Ausbringmittel (10) über eine Zapfwelle (28) der Zugmaschine (4) rotatorisch angetrieben ist, und wobei das Verfahren (100) eine Regelung der Zapfwellendrehzahl in Abhängigkeit von einer Soll-Arbeitsbreite des Streufahrzeugs (6) umfasst.

10. Verfahren (100) nach einem der vorstehenden Ansprüche,
wobei der Transportboden (14) über eine Zapfwelle (28) der Zugmaschine (4) rotatorisch angetrieben ist, und wobei das Verfahren eine Zu- und/oder Abschaltung des Transportbodenantriebs und/oder eine Regelung der Zapfwellendrehzahl in Abhängigkeit von der gewünschten Transportbodengeschwindigkeit (u) umfasst.

11. Streufahrzeug (6), insbesondere Dung- und/oder Universalstreuer (6), mit einer Ladefläche (8) zur Aufnahme von Streugut, wenigstens einem Ausbringmittel (10), mittels welchem Streugut erfasst und ausgebracht wird, einem beweglichen Transportboden (14), welcher dazu eingerichtet ist, das Streugut dem Ausbringmittel (10) zuzuführen, und einer Steuerungseinrichtung (30), welche dazu eingerichtet ist, eine Geschwindigkeit (v) des Transportbodens (14) einzustellen,
**dadurch gekennzeichnet, dass** die Steuerungseinrichtung (30) mittels einer Schnittstelle (32) datenleitend mit einer Zugmaschinen-Steuerung (34) verbindbar und dazu eingerichtet ist, eine Fahrgeschwindigkeit (v) der Zugmaschine (4) zu steuern und die Schritte des Verfahrens (100) nach einem der vorstehenden Ansprüche auszuführen.

12. Streufahrzeug (6) nach Anspruch 11,
wobei die Schnittstelle (32) eine standardisierte Schnittstelle (32) ist, insbesondere eine Isobus Tractor Implement Management (TIM)-Schnittstelle (36).

13. Streufahrzeug (6) nach Anspruch 11 oder 12,
wobei das Streufahrzeug (6) eine Wiegeeinrichtung (22), insbesondere eine Brückenwaage, eine hydraulische Waage oder eine mehrkanälige Waage, aufweist, welche datenleitend mit der Steuerungseinrichtung (30) verbunden ist.

14. Landwirtschaftliche Maschine (2) mit einer Zugmaschine (4) und einem Streufahrzeug (6), wobei das Streufahrzeug (6) nach Anspruch 12 oder 13 ausgebildet ist und wobei die Steuerungseinrichtung (30) über die Isobus Tractor Implement Management (TIM)-Schnittstelle (36) mit der Zugmaschinen-Steuerung (34) verbunden ist.

15. Landwirtschaftliche Maschine (2) nach Anspruch 14,
wobei die Zugmaschine (4) ein satellitennavigationsgestütztes Lenksystem, insbesondere ein GPS-Lenksystem, aufweist und wobei die Steuerungseinrichtung (30) und/oder die Zugmaschinen-Steuerung (34) dazu eingerichtet ist, Richtungssteuerungssignale zur Steuerung des Lenksystems der Zugmaschine (4) zu erzeugen.
